(19) Europäisches Patentamt
European Patent Office
Office européen des brevets

(11) Veröffentlichungsnummer: **0 115 622**
**A2**

# (12) EUROPÄISCHE PATENTANMELDUNG

(21) Anmeldenummer: **83113020.8**

(22) Anmeldetag: **23.12.83**

(51) Int. Cl.³: **A 01 N 57/12**, A 01 N 43/70, A 01 N 43/64 // (A01N57/12, 43/70, 43/64),(A01N43/70, 37/06),(A01N43/64, 37/06)

(30) Priorität: **04.01.83 DE 3300107**

(43) Veröffentlichungstag der Anmeldung: **15.08.84 Patentblatt 84/33**

(84) Benannte Vertragsstaaten: **AT BE CH DE FR GB IT LI NL**

(71) Anmelder: **BAYER AG, Konzernverwaltung RP Patentabteilung, D-5090 Leverkusen 1 Bayerwerk (DE)**

(72) Erfinder: **Hausmann, Heinz, Dr., Dierath 5, D-5653 Leichlingen 1 (DE)**
Erfinder: **Schmidt, Robert R., Dr., Im Waldwinkel 110, D-5060 Bergisch-Gladbach 2 (DE)**

(54) **Selektiv-herbizide Mittel enthaltend ein Triazin-Derivat in Kombination mit Lecithin oder Linolsäure.**

(57) Die Erfindung betrifft die Verwendung neuer herbizider Kombinationen zur selektiven Unkrautbekämpfung in Getreidekulturen.

Die Kombinationen enthalten:

(I) ein Triazin-Derivat

und

(II) Lecithin

oder

(III) Linolsäure der Formel

$$CH_3-(CH_2)_4-CH=CH-CH_2-CH=CH-(CH_2)_7-COOH \quad (III).$$

EP 0 115 622 A2

BAYER AKTIENGESELLSCHAFT 5090 Leverkusen, Bayerwerk

Zentralbereich
Patente, Marken und Lizenzen Bas/Kü-c
Typ III

Selektiv-herbizide Mittel enthaltend ein Triazin-Derivat in Kombination mit Lecithin oder Linolsäure

Die Erfindung betrifft neue herbizide Kombinationen, die aus einem bekannten Triazin-Derivat einerseits und aus Lecithin oder Linolsäure andererseits bestehen und zur selektiven Unkrautbekämpfung, vorzugsweise in Getreidekulturen, verwendet werden können.

Es ist bereits bekannt geworden, daß u.a. 1-Amino-3-(2,2-dimethylpropyl)-6-ethylthio-s-triazin-2,4-dion (Ametridion) als Herbizid verwendet werden kann (vgl. z.B. DK-PS 136 067).

Ametridion ist in Getreidekulturen, z.B. in Weizen und Gerste, gut verträglich, weist aber gegen einige Unkräuter und Gräser gewisse Schwächen auf.

Weiterhin ist bekannt, daß Lecithin seiner kolloidalen, oberflächenaktiven, emulgierenden und physiologischen Eigenschaften wegen vielseitig verwendet werden kann,

so werden in der Schädlingsbekämpfung Lecithin-Emulsionen hergestellt, die eine gute Stabilität und Haftfestigkeit besitzen (vgl. z.B. Ullmanns Encyklopädie der technischen Chemie, Bd. 11, 1960, Seiten 549 - 550).

Weiterhin ist bekannt, daß die Wirksamkeit von Pflanzenschutzmitteln, wie z.B. von Fungiziden oder Wachstumsregulatoren, durch Zusatz eines oberflächenaktiven Stoffes in Konzentrationen, die höher sind als die zur Herabsetzung der Oberflächenspannung benötigten Mengen, erhöht werden kann (vgl. GB 2 057 265). Zu diesen oberfächenaktiven Stoffen zählt auch Lecithin.

Es wurde nun überraschend gefunden, daß die neuen Kombinationen, die auf 1 Gewichtsteil des Triazin-Derivates 0,01 - 20 Gewichtsteile an Lecithin bzw. Linolsäure enthalten, eine besonders hohe herbizide Wirkung aufweisen.

Überraschenderweise ist die Wirksamkeit der erfindungsgemäßen Wirkstoffkombinationen wesentlich höher als die Summe der einzelnen Komponenten. Es liegt ein nicht vorhersehbarer echter synergistischer Effekt und nicht nur ein additiver Effekt vor neben einer hohen Selektivität. Somit stellen diese Kombinationen eine wertvolle Bereicherung der Selektivherbizide, insbesondere der Getreideherbizide, dar.

Unter Triazin-Derivaten sind im vorliegenden Fall zur Unkrautbekämpfung geeignete Verbindungen z.B. aus der Gruppe der s-Triazine, as-Triazinone und s-Triazindione zu verstehen.

Als Beispiele für herbizid wirksame s-Triazine seien z.B. genannt:

1.1 2-Chlor-4-ethylamino-6-(1-methyl-1-cyano-ethylamino)-s-triazin (Cyanazin),

1.2 2-Chlor-4,6-bis(ethylamino)-s-triazin (Simazin),

1.3 2-Ethylamino-4-methylthio-6-tert.-butylamino-s-triazin (Terbutryn),

1.4 2-Chlor-4-ethylamino-6-isopropylamino-s-triazin (Atrazin).

Als Beispiele für herbizid wirksame as-Triazin-5-one seien z.B. genannt:

2.1 4-N-Isobutylidenamino-6-tert.-butyl-3-(methylthio)-as-triazin-5(4H)-on (Isomethiozin),

2.2 4-Amino-6-tert.-butyl-3-(methylthio)-as-triazin-5(4H)-on (Metribuzin),

2.3 4-Amino-6-tert.-butyl-3-(ethylthio)-as-triazin-5(4H)-on.

Als Beispiel für ein herbizid wirksames s-Triazindion sei z.B. genannt:

3.1 1-Amino-3-(2,2-dimethylpropyl)-6-ethylthio-s-triazin-2,4-dion (Ametridion).

Als Unkräuter, die im allgemeinen als Verunreinigung in Getreidekulturen auftreten und durch die erfindungsgemäßen Kombinationen sicher bekämpft werden, seien beispielsweise genannt:

dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea; sowie

monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Besonders gut eignen sich die neuen Wirkstoffkombinationen zur Unkrautbekämpfung im Weizen.

Die Wirkungssteigerung der erfindungsgemäßen Wirkstoffkombinationen ist bei bestimmten Konzentrationsverhältnissen

besonders stark ausgeprägt. Jedoch können die Gewichtsverhältnisse der Komponenten in den Wirkstoffkombinationen in relativ großen Bereichen variiert werden. Im allgemeinen entfallen auf 1 Gewichtsteil Triazin-Derivat 0,01 - 20 Gewichtsteile, vorzugsweise 0,1 - 10 Gewichtsteile, Lecithin bzw. Linolsäure.

Die erfindungsgemäßen Kombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsionskonzentrate, Wirkstoff-imprägnierte Natur- und synthetische Stoffe, Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmitteln können z.B. auch organische Lösungsmitteln als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine,

z.B. Erdölfraktionen, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid und Dimethylsulfoxid.

Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

In den Formulierungen können als weitere Zusätze Farbstoffe wie anorganische Pigmente, zum Beispiel Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent der Kombination, vorzugsweise zwischen 0,5 und 90 %.

Die erfindungsgemäßen Kombinationen können in Form von Fertigformulierungen zur Anwendung gebracht werden. Die in den Kombinationen enthaltenen Komponenten können aber auch als Einzelformulierungen bei der Anwendung gemischt, d.h. in Form von Tankmischungen zur Anwendung gebracht werden. Zur besseren Emulgierbarkeit wird vorzugsweise dem Lecithin bzw. der Linolsäure ungefähr 10 % des Lecithins- bzw. Linolsäureanteils eines üblicher Weise verwendeten Emulgators, z.B. Emulgator W, zugesetzt.

Die neuen Kombinationen können als solche oder in ihren Formulierungen weiterhin auch in Mischung mit anderen bekannten Getreide-Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Pflanzennährstoffen und Bodenstrukturverbesserungsmitteln ist möglich.

Die neuen Kombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die Aufwandmengen der erfindungsgemäßen Kombination können in einem gewissen Bereich variiert werden; sie hängen u.a. vom Wetter und von den Bodenfaktoren ab. Im allgemeinen liegen die Aufwandmengen zwischen 0,2 und 8 kg Wirkstoffkombination pro ha, vorzugsweise zwischen 0,5 und 5 kg/ha.

Die erfindungsgemäßen Kombinationen werden vorzugsweise nach dem Auflaufen der Pflanzen appliziert. Sie können auch vor der Saat in den Boden eingearbeitet werden oder vor dem Auflaufen appliziert werden.

Die erhöhte herbizide Wirkung der neuen Kombinationen geht aus den nachfolgenden Beispielen hervor. Während die einzelnen Komponenten in der herbiziden Wirkung Schwächen aufweisen, zeigen die Kombinationen eine sehr breite Unkrautwirkung, die über eine einfache Wirkungssummierung hinausgeht.

Ein synergistischer Effekt liegt bei Herbiziden immer dann vor, wenn die herbizide Wirkung der Kombination größer ist als die der einzeln applizierten Stoffe.

Die zu erwartende Wirkung für eine gegebene Kombination zweier Stoffe kann wie folgt berechnet werden (vgl. COLBY, S.R., "Calculating synergistic and antagonistic responses of herbizide combinations", Weeds 15, Seiten 20 - 22, 1967):

Wenn X = % Schädigung durch Herbizid (Triazin-Derivat = Stoff A) bei p kg/ha Aufwandmenge und
Y = % Schädigung durch Lecithin bzw. Linolsäure (= Stoff B) bei q kg/ha Aufwandmenge und
E = die erwartete Schädigung der Stoffe A und B, bei p und q kg/ha Aufwandmenge,

dann ist $E = X + Y - \frac{X \cdot Y}{100}$ .

Ist die tatsächliche Schädigung größer als berechnet, so ist die Kombination in ihrer Wirkung überadditiv, d.h. sie zeigt einen synergistischen Effekt.

Aus den nachfolgenden Beispielen geht hervor, daß die gefundene herbizide Wirkung der erfindungsgemäßen Kombination bei den Unkräutern größer ist als die berechnete, d.h., daß die neue Kombination synergistisch wirkt.

Beispiel

Post-emergence-Test

Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Mit der Wirkstoffzubereitung spritzt man Testpflanzen, welche eine Höhe von 5 - 15 cm haben so, daß die jeweils gewünschten Wirkstoffmengen pro Flächeneinheit ausgebracht werden. Die Konzentration der Spritzbrühe wird so gewählt, daß in 2000 l Wasser/ha die jeweils gewünschten Wirkstoffmengen ausgebracht werden. Nach drei Wochen wird der Schädigungsgrad der Pflanzen bonitiert in % Schädigung im Vergleich zur Entwicklung der unbehandelten Kontrolle.
Es bedeuten:

0 % = keine Wirkung (wie unbehandelte Kontrolle)
100 % = totale Vernichtung

## Tabelle A

post-emergence-Test / Gewächshaus

| Wirkstoff bzw. Stoff-kombination | Aufwandmenge kg/ha WST | Wirkung bzw. Schädigung Weizen gef.* | Weizen ber.* | Galinsoga gef.* | Galinsoga ber.* |
|---|---|---|---|---|---|
| Ametridion (3.1) (bekannt) | 1,4 | 0 | | 60 | |
| Lecithin (bekannt) | 2 | 0 | | 0 | |
| Linolsäure (bekannt) | 2 | 0 | | 0 | |
| Ametridion (3.1) +Lecithin (erfindungsgemäß) | 1,4 + 2 | 0 | 0 | 100 | 60 |
| Ametridion (3.1) + Linolsäure (erfindungsgemäß) | 1,4 + 2 | 0 | 0 | 85 | 60 |

gef.* = gefundene Wirkung in Prozent

ber.* = berechnete Wirkung in Prozent

Patentansprüche

1. Selektiv-herbizide Mittel, gekennzeichnet durch einen Gehalt an einer Kombination bestehend aus einem Triazin-Derivat und Lecithin oder Linolsäure.

2. Selektiv-herbizide Mittel gemäß Anspruch 1, dadurch gekennzeichnet, daß in den Kombinationen das Gewichtsverhältnis von Triazin-Derivat zu Lecithin oder Linolsäure zwischen 1:0,01 und 1:20 liegt.

3. Selektiv-herbizide Mittel gemäß Anspruch 1, dadurch gekennzeichnet, daß in den Kombinationen das Gewichtsverhältnis von Triazin-Derivat zu Lecithin oder Linolsäure zwischen 1:0,1 und 1:10 liegt.

4. Selektiv-herbizide Mittel gemäß Anspruch 1, dadurch gekennzeichnet, daß als Triazin-Derivat ein geeignetes s-Triazin, as-Triazin-5-on oder s-Triazindion enthalten ist.

5. Selektiv herbizide Mittel nach Anspruch 1, dadurch gekennzeichnet, daß als Triazin-Derivat enthalten sein kann

eines der nachfolgenden s-Triazine:

1.1 2-Chlor-4-ethylamino-6-(1-methyl-1-cyano-ethylamino)-s-triazin (Cyanazin),

1.2 2-Chlor-4,6-bis(ethylamino)-s-triazin (Simazin),

1.3 2-Ethylamino-4-methylthio-6-tert.-butyl-amino-s-triazin (Terbutryn),

1.4 2-Chlor-4-ethylamino-6-isopropylamino-s-triazin (Atrazin)

oder

eines der folgenden as-Triazin-5-one:

2.1 4-N -Isobutylidenamino-6-tert.-butyl-3-(methylthio)-as-triazin-5(4H)-on (Isomethiozin),

2.2 4-Amino-6-tert.-butyl-3-(methylthio)-as-triazin-5(4H)-on (Metribuzin),

2.3 4-Amino-6-tert.-butyl-3-(ethylthio)-as-triazin-5(4H)-on

oder

das folgende s-Triazindion:

3.1 1-Amino-3-(2,2-dimethylpropyl)-6-ethylthio-s-triazin-2,4-dion (Ametridion).

6. Verfahren zur selektiven Bekämpfung von Unkraut in Getreidekulturen, dadurch gekennzeichnet, daß man eine Kombination gemäß Anspruch 1 nach dem Auflaufen der Pflanzen auf die Getreidefelder einwirken läßt.

7. Verwendung einer Kombination gemäß Anspruch 1 zur selektiven Bekämpfung von Unkraut in Getreidekulturen.

8. Verfahren zur Herstellung von selektiv-herbiziden Mitteln, dadurch gekennzeichnet, daß man eine Kombination gemäß Anspruch 1 mit Streckmitteln und/oder grenzflächenaktiven Stoffen und/oder festen Trägerstoffen vermischt.

9. Verfahren zur Herstellung von selektiv-herbiziden Mitteln, dadurch gekennzeichnet, daß man eines der Triazin-Derivate in Wasser suspendiert und mit Lecithin oder Linolsäure, die einen Emulgator enthält, mischt.